Europäisches Patentamt

European Patent Office

Office européen des brevets

(19)

(11) Veröffentlichungsnummer: **0 250 819 B1**

(12) **EUROPÄISCHE PATENTSCHRIFT**

(45) Veröffentlichungstag der Patentschrift: **24.02.93**

(51) Int. Cl.⁵: **H04B 10/00**, H04L 27/06, H04L 27/14, H04L 27/22

(21) Anmeldenummer: **87107102.3**

(22) Anmeldetag: **16.05.87**

(54) **Optischer Überlagerungsempfänger.**

(30) Priorität: **28.06.86 DE 3621734**

(43) Veröffentlichungstag der Anmeldung:
**07.01.88 Patentblatt 88/01**

(45) Bekanntmachung des Hinweises auf die
Patenterteilung:
**24.02.93 Patentblatt 93/08**

(84) Benannte Vertragsstaaten:
**AT BE CH DE ES FR GB GR IT LI NL SE**

(56) Entgegenhaltungen:
**DE-B- 1 057 170**

**ELECTRONICS LETTERS, Band 21, Nr. 2, Januar 1985, Seiten 52-53, Stevenage, Herts, GB; T. IMAI et al.: "Optical polarisation control utilising an optical heterodyne detection scheme"**

**PATENT ABSTRACTS OF JAPAN, Band 8, Nr. 243 (E-277)[1680], 8. November 1984; & JP-A-59 122 140**

(73) Patentinhaber: **Alcatel SEL Aktiengesellschaft
Lorenzstrasse 10
W-7000 Stuttgart 40(DE)**

(72) Erfinder: **Mohr, Friedemann, Dr.
Stauferstrasse 6
W-7253 Renningen(DE)**

(74) Vertreter: **Graf, Georg Hugo, Dipl.-Ing. et al
Alcatel SEL AG Patent- und Lizenzwesen
Postfach 30 09 29
W-7000 Stuttgart 30 (DE)**

PATENT ABSTRACTS OF JAPAN, Band 10, Nr. 111 (P-451)[2168], 25. April 1986; & JP-A-60 242 435

ELECTRONICS LETTERS, Band 21, Nr. 18, 29. August 1985, Seiten 787-788, Stevenage, GB; T. OKOSHI et al.: "New polarisation-control scheme for optical heterodyne receiver using two faraday rotators"

ELECTRONICS LETTERS, Band 22, Nr. 1, 2. Januar 1986, Seiten 9-11, Stevenage, GB; A.W. DAVIS et al.: "Coherent optical receiver for 680 Mbit/s using phase diversity"

ELECTRONICS LETTERS, Band 21, Nr. 19, 12. September 1985, Seiten 867-868, Stevenage, GB; T.S. HODGKINSON et al.: "Demodulation of optical DPSK using in-phase and quadrature detection"

CONFERENCE ON LASERS AND ELECTRO-OPTICS, 9.-13. Juni 1986, Seiten 270-271, OSA/IEEE, San Fransisco, California, US; T. MATSUMOTO: "Advances in coherent optical transmission systems"

PATENT ABSTRACTS OF JAPAN, Band 6, Nr. 222 (E-140)[1100], 6. November 1982; & JP-A-57 125 557

## Beschreibung

Die Erfindung bezieht sich auf einen optischen Überlagerungsempfänger.

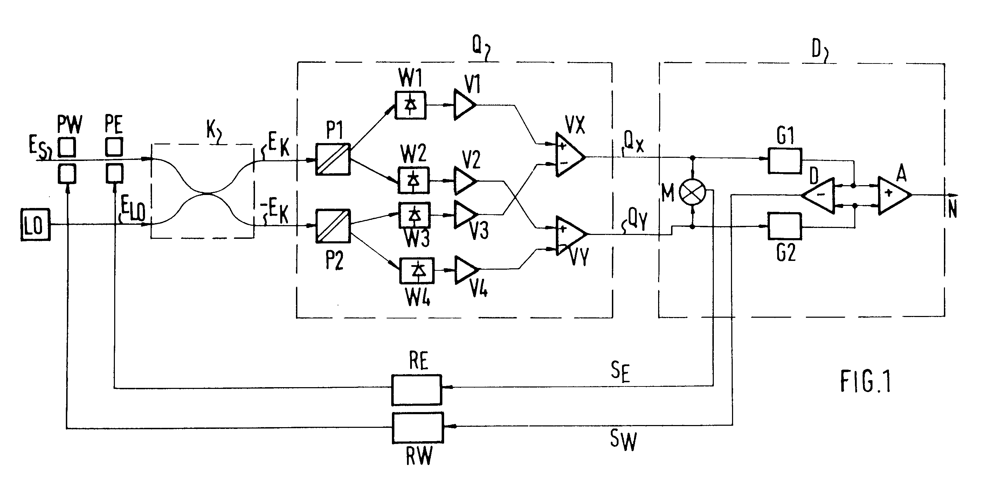

Aus Electronics Letters Vol. 21, No. 19, 12.09.1985, S. 867f ist ein optischer Überlagerungsempfänger für ASK- und DPSK-modulierte Signale bekannt, bei dem dem einen Eingang eines 2x2 Faserkopplers linear und dem anderen Eingang zirkular polarisiertes Licht zugeführt ist, an dessen einem Ausgang ein Polarisationsstrahlteiler angeschlossen ist, der zwei um 90° phasenverschobene Lichtsignale liefert, die nach getrennter optisch-elektrischer Wandlung und Demodulation zu einem Nutzsignal aufaddiert werden. Zur Verbesserung der Empfängerempfindlichkeit ist eine automatische Polarisationsregeleinrichtung vorgeschlagen, die gemäß Fig. 1 vom Empfänger unabhängig ist. Weitere Angaben zu einem konkreten Ausführungsbeispiel oder zu einem Verfahren zur Polarisationsregelung sind nicht gemacht.

Es ist daher Aufgabe der Erfindung im einzelnen anzugeben, wie bei einem optischen Überlagerungsempfänger eine Regelung der Polarisation einfach durchgeführt werden kann.

Die Lösung dieser Aufgabe erfolgt mit den im Hauptanspruch genannten Mitteln. Weiterbildungen auch hinsichtlich unterschiedlicher Modulationsverfahren sind in den Unteransprüchen enthalten.

Der neue Überlagerungsempfänger hat den Vorteil, daß er auch für den Empfang von mit höchsten Bitraten modulierten Signalen verwendbar ist, da seine Zwischenfrequenz zumindest bei ASK-, PSK- und DPSK-modulierten Signalen im Vergleich zur Signalbandbreite sehr klein gewählt sein kann.

Die Erfindung wird nachstehend anhand von Ausführungsbeispielen erläutert. Es zeigt:

Fig. 1 einen optischen Empfänger für ASK-modulierte Signale

Fig. 2 einen optischen Empfänger für PSK-modulierte Signale

Fig. 3 einen optischen Empfänger für FSK-modulierte Signale.

Weitere Ausführungen sind in der Beschreibung enthalten.

Gemäß Fig. 1 enthält der optische Überlagerungsempfänger einen nicht polarisierenden, nicht doppelbrechenden Faserkoppler K, dessen einem Eingang Licht $E_S$ von einem optischen Sender zugeführt ist, das nacheinander zwei Polarisationsstellelemente PW, PE durchlaufen hat, die dem Koppler K vorgeschaltet sind, und dessen anderem Eingang zirkular polarisiertes Licht $E_{LO}$ eines Lokaloszillators LO zugeführt ist. Es soll gelten

$$E_S = |E_S|(\exp(ivt)) \text{ und } E_{LO} = |E_{LO}|(\exp(iwt)).$$

$E_S$ ist je nach Modulationsart in Amplitude (ASK), Frequenz (FSK) oder Phase (PSK, DPSK) moduliert.

Am einen Ausgang des Kopplers K tritt das optische Nutzsignal $E_K = |E_K|(\exp(ift))$, mit $f = v-w$, am anderen Ausgang das Signal $-E_K$ auf, denen beiden gleichphasig das Intensitätsrauschen des Lokaloszillators LO überlagert ist. Die beiden Ausgänge des Kopplers K sind mit einer Einrichtung O verbunden, die an ihrem einen Ausgang ein Signal $Q_x = |Q|\sin ft$ und an ihrem anderen Ausgang ein Signal $Q_y = |Q|\cos ft$ abgibt, wobei diese Signale nicht mehr mit dem Intensitätsrauschen des Lokaloszillators LO überlagert sind. Die Signale $Q_x$, $Q_y$ werden einem Demodulator D zugeführt, der das demodulierte Nutzsignal N, ein Regelsignal $S_W$ zur Einstellung des Winkels des Lichts $E_S$ mittels eines Reglers RW und des Polarisationsstellelements PW und ein Regelsignal $S_E$ zur Einstellung der Elliptizität des Lichts $E_S$ mittels eines Reglers RE und des Polarisationsstellelements PE liefert.

Die Einrichtung Q enthält zwei Polarisationsstrahlteiler P1, P2 denen jeweils eines der Signale $E_K$, $-E_K$ zugeführt ist, und denen je zwei optisch-elektrische Wandler W1-W4 und diesen je ein Frontendverstärker V1-V4 nachgeschaltet sind. Der Ausgang des Frontendverstärkers V1 ist mit dem nichtinvertierenden, der Ausgang des Frontendverstärkers V3 mit dem invertierenden Eingang eines Verstärkers VX, verbunden. Der Ausgang des Frontendverstärkers V2 ist mit dem nichtinvertierenden, der Ausgang des Frontendverstärkers V4 mit dem invertierenden Eingang eines Verstärkers VY verbunden. Der Verstärker VX liefert das Signal $Q_x$ und der Verstärker VY liefert das Signal $Q_y$

Zur Demodulation von ASK-modulierten Signalen enthält der Demodulator D einen Mischer M, der die Signale $Q_x$, $Q_y$ miteinander multipliziert, wodurch das Regelsignal $S_E$ entsteht. Ferner enthält er einen Vollwellengleichrichter G1, dem das Signal $Q_x$ zugeführt ist, und einen Vollwellengleichrichter G2, dem das Signal $Q_y$ zugeführt ist. Die Ausgangssignale der Vollwellengleichrichter werden durch einen Subtrahierer D voneinander subtrahiert, wodurch das Regelsignal $S_W$ entsteht, und durch einen Addierer A addiert, wodurch das Nutzsignal N entsteht.

Anstelle der Gleichrichter G1, G2 können bei einer anderen Ausführung Multiplizierer vorgesehen sein, die die Signale $Q_x$, $Q_y$ quadrieren.

Zur Demodulation von DPSK-modulierten Signalen werden diesen Multiplizierern die Signale $Q_x$, $Q_y$ einmal unverzögert und einmal durch Verzögerungsglieder um einen Bittakt verzögert zugeführt.

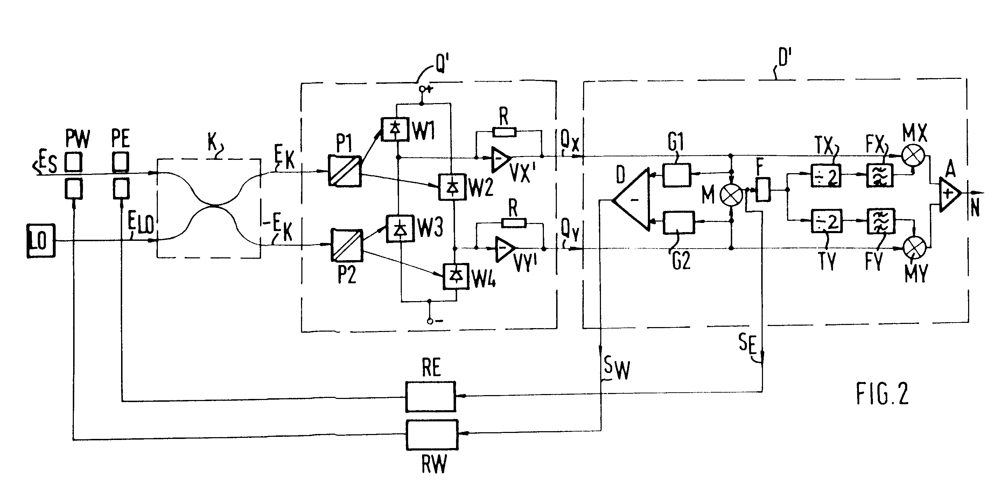

Fig. 2 zeigt einen optischen Überlagerungsempfänger, der sich von dem nach Fig. 1 durch eine Einrichtung Q' und einen Demodulator D' un-

terscheidet, der für PSK-modulierte Signale geeignet ist.

Die Einrichtung Q' enthält ebenfalls zwei Polarisationsstrahlteiler P1, P2, denen jeweils eines der Signale $E_K$, -$E_K$ zugeführt ist, und denen ebenfalls je zwei optisch-elektrische Wandler W1-W4 optisch nachgeschaltet sind. Die Wandler W1 und W3 sind elektrisch hintereinander und parallel zur Hintereinanderschaltung der Wandler W2 und W4 geschaltet. Die Verbindungspunkte der Wandler W1 und W3 bzw. W2 und W4 sind jeweils mit einem durch einen Widerstand R rückgekoppelten invertierenden Verstärker VX', VY' verbunden, die die Signale $Q_x$, $Q_y$ liefern.

Beim Demodulator D' erfolgt die Erzeugung der Regelsignale $S_E$, $S_W$ genauso wie beim Demodulator D. Das Ausgangssignal des Mischers M besitzt einen Zeitverlauf proportional zu sin2ft. Es wird durch ein Bandfilter F, das auf 2f abgestimmt ist, spektral gefiltert, und dann zwei Frequenzteilern TX, TY bestehend aus zwei Flipflops zugeführt, die auf jeweils unterschiedliche Flanken triggern, und Rechteckspannungen erzeugen. Jedem Flipflop ist ein Filter FX, FY nachgeschaltet, die nur die in den Rechteckspannungen enthaltenen Grundwellen durchlassen. Das Filter FX liefert eine Spannung sinft an einen Mischer MX, dem außerdem das Signal $Q_x$ zugeführt ist, und das Filter FY liefert eine Spannung cosft an einen Mischer MY, dem außerdem das Signal $Q_y$ zugeführt ist. Die Ausgangssignale der Mischer MX, MY sind einem Addierer A zugeführt, der das Nutzsignal N liefert.

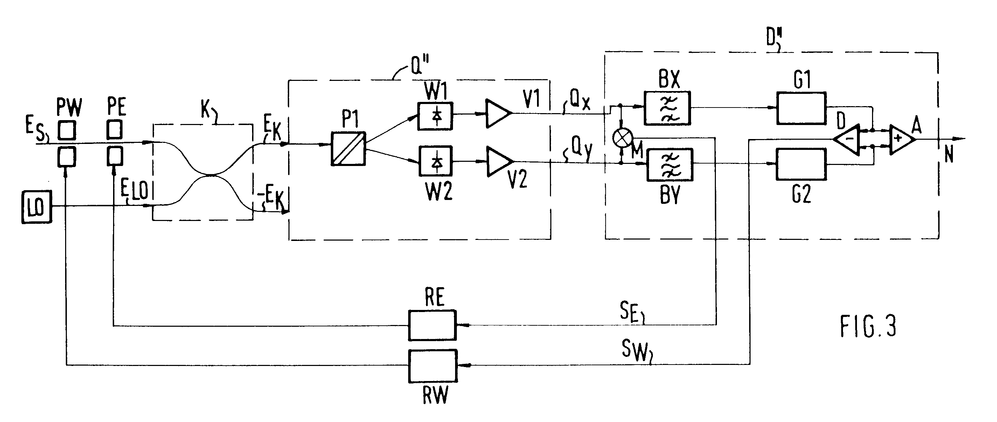

Fig. 3 zeigt einen optischen Überlagerungsempfänger, der sich von dem nach Fig. 1 durch eine Einrichtung Q'' und einen Demodulator D'' unterscheidet, der für FSK-modulierte Signale geeignet ist.

Die Einrichtung Q'' enthält man aus der Einrichtung Q durch Weglassen des zweiten Polarisationsstrahlteilers P2, der Wandler W3, W4, und der Verstärker V3, V4, VX, VY.

Den Demodulator D'' enthält man aus dem Demodulator D durch Hinzufügen zweier auf die verwendeten Frequenzen abgestimmter Bandpässe BX, BY, die den Gleichrichtern G1, G2 vorgeschaltet sind und das FSK-modulierte Signal in ein ASK-moduliertes Signal überführen.

In Fig. 3 nicht dargestellt ist eine erforderlichenfalls vorzusehende Frequenzregelung für den Lokaloszillator LO, die gewährleistet, daß die Mittenfrequenzen der Signale $Q_x$, $Q_y$ mit denen der Bandpässe BX, BY übereinstimmen.

Die Einrichtungen Q, Q', Q'' sind jeweils für jedes Ausführungsbeispiel geeignet, da sie von der Modulationsart unabhängig sind. Ferner kann bei einer weiteren Ausführung der Polarisationsstrahlteiler P1 der Einrichtung Q'' durch zwei Polarisatoren ersetzt sein, die jeweils einem Ausgang des Kopplers K nachgeschaltet sind, und deren Orientierung um 90° gegeneinander verdreht ist. Derartige Polarisatoren lassen sich in faseroptischer und integriert-optischer Technologie leichter realisieren als Polarisationsstrahlteiler.

## Patentansprüche

1. Optischer Überlagerungsempfänger mit einem optischen Koppler (K) mit zwei Eingängen und zwei Ausgängen dessen einem Eingang linear polarisiertes Licht und dessen anderem Eingang zirkular polarisiertes Licht zugeführt wird, wobei eines der beiden mit dem Nutzsignal moduliert ist, mit mindestens einem Polarisationsstrahlteiler, der an einem Ausgang des Kopplers (K) angeschlossen ist oder Polarisatoren, die an beiden Ausgängen des Kopplers (K) angeschlossen sind, mit mindestens zwei optisch-elektrischen Wandlern für die so gewonnenen um 90° unterschiedlich polarisierten Lichtstrahlen, an deren Ausgang zwei um 90° phasenverschobene Hochfrequenzsignale auftreten, mit einer Auswerteschaltung, die das Nutzsignal (N) abgibt, und mit je einer Regeleinrichtung (RW, RE) für den Neigungswinkel und die Elliptizität des linear polarisierten Lichtes, derart daß ein konstanter Neigungswinkel dieses Lichtes von 45° oder 135° erhalten wird, wobei zur Regelung des Neigungswinkels ein erstes Polarisationsstellglied (PW) dient, das von der Amplitudendifferenz der Hochfrequenzsignale ($Q_x$, $Q_y$) gesteuert wird, und zur Regelung der Elliptizität ein zweites Polarisationsstellglied (PE) dient, das vom Phasenwinkel der Hochfrequenzsignale ($Q_x$, $Q_y$) gesteuert wird.

2. Optischer Überlagerungsempfänger nach Anspruch 1, dadurch gekennzeichnet, daß bei ASK-Modulation das Nutzsignal (N) durch Vollwellengleichrichtung und Addition der beiden um 90° phasenverschobenen Hochfrequenzsignale ($Q_x$, $Q_y$) gewonnen wird.

3. Optischer Überlagerungsempfänger nach Anspruch 1, dadurch gekennzeichnet, daß bei ASK-Modulation das Nutzsignal (N) durch Quadrieren und Addieren, und daß bei DPSK-Modulation das Nutzsignal (N) durch Multiplizieren jedes Hochfrequenzsignals ($Q_x$, $Q_y$) mit demselben aber verzögerten Hochfrequenzsignal ($Q_x$, $Q_y$) und Addieren der beiden derart entstehenden um 90° phasenverschobenen Hochfrequenzsignale gewonnen wird.

4. Optischer Überlagerungsempfänger nach Anspruch 2 oder 3, dadurch gekennzeichnet, daß bei FSK-Modulation die Hochfrequenzsignale ($Q_x$, $Q_y$) vor der Gleichrichtung oder Multiplikation durch Bandfilterung in ASK-modulierte Signale umgewandelt sind.

5. Optischer Überlagerungsempfänger nach Anspruch 1, dadurch gekennzeichnet, daß bei PSK-Modulation die Hochfrequenzsignale ($Q_x$, $Q_y$) drei Mischern zugeführt werden, wobei aus dem Ausgangssignal des ersten Mischers (M) Signale der Form sin ft und cos ft (f = Zwischenfrequenz) gewonnen werden, die den beiden anderen Mischern zugeführt werden, so daß an deren Ausgängen Signale der Form ± $\sin^2$ ft und ± $\cos^2$ ft auftreten und daß das Nutzsignal (N) durch Addition dieser beiden Signale gewonnen wird.

6. Optischer Überlagerungsempfänger nach einem der vorangehenden Ansprüche, dadurch gekennzeichnet, daß dem zweiten Ausgang des Kopplers (K) ebenfalls ein Polarisationsstrahlteiler mit zwei optisch-elektrischen Wandlern nachgeschaltet ist, und daß die Hochfrequenzsignale ($Q_x$, $Q_y$) durch Spannungs- oder Stromsubtraktion der Ausgangssignale der vier optisch-elektrischen Wandler (W1, W2, W3, W4) gewonnen werden.

## Claims

1. Optical heterodyne receiver comprising an optical coupler (K) having two input and two output ports, the two input ports being coupled to linearly polarized light and circularly polarized light, respectively, one of the two kinds of polarized light being modulated with the useful signal, at least one polarization-selective beam splitter connected to one of the output ports of the coupler (K), or polarizers connected to the two output ports of the coupler (K), at least two optical-to-electric transducers for the light beams thus obtained, which differ in polarization angle by 90°, the outputs of the two optical-to-electric transducers providing two radio-frequency signals differing in phase by 90°, an evaluation circuit delivering the useful signal (N), and two controllers (RW, RE) for controlling the polarization angle and the ellipticity of the linearly polarized light such that a constant polarizsation angle of this light of 45° or 135° is obtained, the control of the polarization angle being performed by a first polarization control element (PW) controlled by the amplitude difference between the radio-frequency signals ($Q_x$, $Q_y$), and the control of the ellipticity being performed by a second polarization control element (PE) controlled by the phase angle of the radio-frequency signals ($Q_x$, $Q_y$).

2. An optical heterodyne receiver as claimed in claim 1, characterized in that with ASK modulation, the useful signal (N) is obtained by full-wave rectification and addition of the two radio-frequency signals ($Q_x$, $Q_y$) differing in phase by 90°.

3. An optical heterodyne receiver as claimed in claim 1, characterized in that with ASK modulation, the useful signal (N) is obtained by squaring and adding, and that with DPSK modulation, the useful signal (N) is obtained by multiplying each of the radio-frequency signals ($Q_x$, $Q_y$) by the same, but delayed radio-frequency signal ($Q_x$, $Q_y$) and adding the two resulting radio-frequency signals, which differ in phase by 90°.

4. An optical heterodyne receiver as claimed in claim 2 or 3, characterized in that with FSK modulation, the radio-frequency signals ($Q_x$, $Q_y$), before being rectified or multiplied, are converted into ASK-modulated signals by band-pass filtering.

5. An optical heterodyne receiver as claimed in claim 1, characterized in that with PSK modulation, the radio-frequency signals ($Q_x$, $Q_y$) are fed to three mixers, with signals of the form sin ft and cos ft (f = intermediate frequency) being derived from the output signal of the first mixer (M) and fed to the two other mixers, so that the outputs of the latter provide signals of the form ± $\sin^2$ ft and ± $\cos^2$ ft, and that the useful signal (N) is obtained by adding these two signals together.

6. An optical heterodyne receiver as claimed in any one of the preceding claims, characterized in that the second output port of the coupler (K) is also connected to a polarization-selective beam splitter followed by two optical-to-electric transducers, and that the radio-frequency signals ($Q_x$, $Q_y$) are derived by voltage or current subtraction of the output signals of the four optical-to-electric transducers (W1, W2, W3, W4).

## Revendications

1. Récepteur optique hétérodyne comportant un connecteur optique (K) présentant deux entrées et deux sorties à l'une des entrées duquel on amène de la lumière polarisée linéairement et à l'autre sortie duquel on amène de la lumière polarisée circulairement, étant précisé que l'une des deux est modulée avec le signal utile, récepteur comportant au moins un diviseur de faisceau de polarisation qui est relié à une sortie du connecteur (K) ou des polariseurs qui sont reliés aux deux sorties du connecteur (K), comportant au moins deux convertisseurs opto-électriques pour les faisceaux lumineux ainsi obtenus, polarisés sous une différence de 90°, convertisseurs à la sortie desquels apparaissent deux signaux de haute fréquence décalés en phase de 90°, comportant un circuit de traitement qui émet le signal utile (N), et comportant chacun un dispositif de régulation (RW, RE) pour l'angle d'inclinaison et pour l'ellipticité de la lumière polarisée linéairement, de façon à obtenir un angle d'inclinaison constant de cette lumière de 45° ou 135°, étant précisé que pour la régulation de l'angle d'inclinaison on utilise un premier élément réglant de polarisation (PW) qui est piloté par la différence d'amplitude des signaux de haute fréquence ($Q_x$, $Q_y$) et que pour la régulation de l'ellipticité on utilise un second élément réglant de polarisation (PE) qui est piloté par l'angle de phase des signaux de haute fréquence ($Q_x$, $Q_y$).

2. Récepteur optique hétérodyne selon la revendication 1, caractérisé par le fait que dans le cas de la modulation par sauts d'amplitude (ASK), on obtient le signal utile (N) par redressement en onde pleine et addition des deux signaux de haute fréquence ($Q_x$, $Q_y$) décalés en phase de 90°.

3. Récepteur optique hétérodyne selon la revendication 1, caractérisé par le fait que dans le cas de la modulation par sauts d'amplitude (ASK), on obtient le signal utile (N) par élévation au carré et addition et, que dans le cas de la modulation par déplacement de phase différentiel (DPSK), on obtient le signal utile (N) par multiplication de chaque signal de haute fréquence ($Q_x$, $Q_y$) par le même signal de haute fréquence ($Q_x$, $Q_y$), mais retardé et addition des deux signaux de haute fréquence ainsi obtenus, décalés en phase de 90°.

4. Récepteur optique hétérodyne selon la revendication 2 ou 3, caractérisé par le fait que dans le cas de la modulation par déplacement de fréquence (FSK), les signaux de haute fréquence ($Q_x$, $Q_y$) sont, avant redressement ou multiplication, convertis, par filtrage par filtre passe-bande, en signaux modulés par sauts d'amplitude (ASK).

5. Récepteur optique hétérodyne selon la revendication 1, caractérisé par le fait que dans le cas de modulation par déplacement de phase (PSK), on amène les signaux de haute fréquence ($Q_x$, $Q_y$) à trois mélangeurs, étant précisé qu'à partir du signal de sortie du premier mélangeur (M), on obtient les signaux de la forme sin ft et cos ft (f = fréquence intermédiaire) que l'on amène aux deux autres mélangeurs, de sorte qu'à leurs sorties, apparaissent des signaux de la forme $\pm \sin^2$ ft et $\pm \cos^2$ ft et que le signal utile N s'obtienne par addition de ces deux signaux.

6. Récepteur optique hétérodyne selon l'une des revendications précédentes, caractérisé par le fait qu'en aval de la seconde sortie du connecteur (K) est également monté un diviseur de faisceau de polarisation avec deux convertisseurs opto-électriques et par le fait que l'on obtient les signaux de haute fréquence ($Q_x$, $Q_y$) par soustraction de la tension ou de l'intensité des signaux de sortie des quatres convertisseurs opto-électriques (W1, W2, W3, W4).

FIG.1

FIG.2

FIG. 3